# EUROPÄISCHE PATENTSCHRIFT

(11) **EP 0 967 467 B1**
(45) Veröffentlichungstag und Bekanntmachung des Hinweises auf die Patenterteilung: **09.08.2006**
(21) Anmeldenummer: 99111798.7
(22) Anmeldetag: 18.06.1999
(51) Int. Cl.: G01J 1/22, G01J 1/04

(54) **Optoelektronische Sensoranordnung**
Optoelectronic sensor device
Dispositif détecteur optoélectronique

(30) Priorität: 25.06.1998 DE 19828433
(43) Veröffentlichungstag der Anmeldung: 29.12.1999
(73) Patentinhaber: SICK AG, 79183 Waldkirch, Breisgau (DE)
(72) Erfinder: Nübling, Ralf Ulrich, 79211 Denzlingen (DE)
(74) Vertreter: Manitz, Finsterwald & Partner GbR

(56) Entgegenhaltungen:
- GB-A- 2 225 659
- US-A- 4 848 879
- US-A- 5 424 528

## Beschreibung

Die vorliegende Erfindung betrifft eine optoelektronische Sensoranordnung, insbesondere für die Durchhangs-, Kanten- und/oder Lichtschnittbestimmung.

Bei diesem Verfahren wird ein Lichtsignal so in Richtung eines insbesondere linienförmigen Empfangselementes ausgesandt, daß auf das Empfangselement ein linienförmiges Lichtsignal abgebildet wird. Beispielsweise bei der Durchhangbestimmung kann aufgrund der Länge des von dem durchhängenden Objekt abgedeckten Abschnittes der auf dem Empfangselement auftreffenden Linie die Größe des Durchhanges bestimmt werden.

Um eine hohe Genauigkeit bei diesem Verfahren zu erreichen, werden üblicherweise hochauflösende Zeilensensoren als Empfangselemente verwendet. Damit die Rechenzeit bei den entsprechenden Auswerteverfahren minimiert werden kann, ist eine möglichst homogene Intensitätsverteilung über die gesamte Länge des auf die Empfangseinheit auftreffenden linienförmigen Lichtsignals erforderlich, wobei diese Homogenität möglichst abstandsunabhängig sein soll.

Da bei der Verwendung von Laserdioden als Strahlungsquellen die Lichtintensität entlang der abgebildeten Linie einer Gauß-Verteilung entspricht, nimmt die Lichtinterisität bei Verwendung einer einzelnen Laserdiode zu den Enden der abgebildeten Linie stark ab.

Aus der GB-A-2 225 659A ist eine optoelektronische Sensoranordnung nach dem Oberbegriff des Anspruchs 1 bekannt. Dabei handelt es sich um ein Barcodelesegerät, das verschiedene Linsen verwendet, um mit Hilfe zweier LEDs eine streifenförmige homogene Ausleuchtung eines Barcodes zu erzeugen. Die durch Überlagerung der von den beiden LEDs ausgehenden und mit Hilfe der Linsen gebündelten Strahlen resultierende Lichtverteilung ist über einen streifenförmigen Bereich hinweg vergleichsweise homogen.

Werden ähnlich wie bei dem aus der GB-A-2 225 659A bekannten Barcodelesegerät mehrere Laserdioden so übereinander angeordnet, dass jeweils die Maxima der Lichtintensitäten entlang der abgebildeten Lichtlinie verschoben sind, so kann grundsätzlich eine bessere Homogenität der Lichtverteilung über einen größeren Abschnitt der Lichtlinie erreicht werden. Hier stellt sich jedoch das Problem, dass für eine optoelektronische Sensoranordnung üblicherweise als Lichtquellen Laserdioden mit linear polarisiertem Licht verwendet werden, um die erforderliche Spiegelsicherheit zu gewährleisten. Durch die Überlagerung der polarisierten Lichtsignale treten in der auf der Empfangseinheit abgebildeten Gesamtlichtlinie Interferenzeffekte auf, die zu unerwünschten Intensitätsschwankungen der auf der Empfangseinheit auftreffenden Lichtsignale führen.

Zwar könnte eine Unterdrückung der Interferenzen durch partielle Änderung der Polarisation erreicht werden, dies ist jedoch zum einen mit relativ großem Aufwand und hohen Verlusten verbunden und zum anderen in vielen Bereichen nicht möglich, da die in Industriesensoren erforderliche Spiegelsicherheit durch Verwendung gekreuzter Linear-Polarisationsfilter nicht möglich ist.

Die US-A 4 848 879 A offenbart eine Lichtmodulationsvorrichtung mit einem beheizbaren flüssigen Medium, dessen Brechungsindex stark temperaturabhängig ist. Von einem Laser ausgesendetes Licht wird zunächst in zwei Strahlen aufgespalten, die später wieder überlagert werden. Auf diese Weise soll eine möglichst regelmäßige Beleuchtung erzeugt werden.

Es ist eine Aufgabe der Erfindung, eine optoelektronische Sensoranordnung nach dem Oberbegriff des Anspruchs 1 anzugeben, mit der eine Lichtlinie auf einer Empfangseinheit so abbildbar ist, dass die Intensitätsverteilung entlang der Lichtlinie über einen großen Bereich im wesentlichen homogen ist. Zudem soll die Spiegelsicherheit der Anordnung gewährleistet sein.

Diese Aufgabe wird ausgehend von einer optoelektronischen Sensoranordnung nach dem Oberbegriff des Anspruchs 1 erfindungsgemäß durch die kennzeichnenden Merkmale des Anspruchs 1 gelöst. Die Lichtsignale sind polarisiert und die optischen Elemente so ausgebildet und angeordnet, dass die auf der Empfangseinheit auftreffenden linienförmigen Lichtsignale im wesentlichen parallel zueinander verlaufen und sowohl in Linienrichtung als auch senkrecht zur Linienrichtung gegeneinander versetzt sind und sich zumindest bereichsweise nicht überlagern.

Die Verwendung von polarisiertem Licht garantiert die erwünschte Spiegelfreiheit. Durch die örtliche Trennung der einzelnen, auf der Empfangseinheit auftreffenden Lichtlinien werden die erwähnten Mehrstrahlinterferenzeffekte verhindert. Solange die Einzellinien so nahe nebeneinander angeordnet sind, dass die aus den Einzellinienbreiten sowie den Abständen zwischen den Linien bestehende Gesamtlinienbreite über den Abbildungsmassstab einer eventuell vorgesehenen Abbildungsoptik höchstens gleich der Breite des lichtempfindlichen Abschnittes der Empfangseinheit ist, ist gewährleistet, dass eine der optischen Überlagerung äquivalente Addition der durch die einzelnen Linien erzeugten Photoströme je Empfangselement der Empfangseinheit entsteht.
Da somit die optische Überlagerung der Lichtintensitäten durch eine elektrische Überlagerung der den Lichtintensitäten entsprechenden Photoströme ersetzt wird, ist bei einer erfindungsgemässen optoelektronischen Sensoranordnung die Verwendung von Sendestrahlung mit jeder beliebigen Polarisationsart möglich, ohne störende Interferenzeffekte zu erzeugen.

Nach einer vorteilhaften Ausführungsform der Erfindung sind die optischen Elemente als Zylinderlinsen ausgebildet. Mit Zylinderlinsen können auf einfache und kostengünstige Weise die erforderlichen Lichtlinien auf der Empfangseinheit erzeugt werden. Dabei kann sowohl durch die Anordnung der Zylinderlinsen zueinander als auch durch Verkippung der Zylinderlinsen eine Plazierung der einzelnen Lichtlinien auf der Empfangseinheit erreicht werden, die eine optische Überlagerung und damit die störenden Interferenzen verhindert.

Um die Breite der auf die Empfangseinheit abgebildeten Lichtlinien festzulegen, können die optischen Elemente Blenden mit im wesentlichen rechteckförmig ausgebildeten Blendenöffnungen umfassen und/oder die Zylinderlinsen im Querschnitt im wesentlichen rechteckförmig ausgebildet sein. Es ist grundsätzlich möglich, bereits die Zylinderlinsen so schmal auszubilden, daß beim Durchstrahlen mit Licht entsprechend schmale Lichtlinien auf die Empfangseinheit abgebildet werden. Die Zylinderlinsen können jedoch auch deutlich breiter ausgebildet sein, so daß beispielsweise durch vor die Zylinderlinsen gesetzte schlitzförmige Blenden die Breite der auf die Empfangseinheit abgebildeten Lichtlinien bestimmt werden. Dabei können die Blenden auch durch lichtundurchlässige, insbesondere geschwärzte Umrandungen der Zylinderlinsen gebildet werden.

Bevorzugt sind die Zylinderlinsen so angeordnet, daß ihre Zylinderachsen, d.h. die Rotationsachse des jeweiligen Zylindermantels, im wesentlichen parallel zueinander verlaufen. Dabei sind die Zylinderlinsen und/oder die Blenden in einer Richtung senkrecht zu den Zylinderachsen gegeneinander versetzt angeordnet, wodurch die auf der Empfangseinheit auftreffenden, einzelnen Lichtlinien in Längsrichtung gegeneinander versetzt sind, so dass jeweils die Maxima der Intensitätsverteilung in Längsrichtung der Lichtlinien gegeneinander verschoben sind.

Bevorzugt sind die Zylinderlinsen und/oder die Blenden auch in Richtung der Zylinderachsen gegeneinander versetzt angeordnet, wodurch die Verschiebung der Lichtlinien senkrecht zur Linienrichtung, d.h. ein Auseinanderziehen der Lichtlinien erfolgt.

Anstelle der Verschiebung der Zylinderlinsen und/oder der Blenden in einer Richtung senkrecht zu den Zylinderachsen können die Zylinderlinsen bevorzugt auch um ihre Zylinderachsen gegeneinander verkippt angeordnet sein, so dass die optischen Achsen der Zylinderlinsen schräg zueinander verlaufen. Auch durch diese Ausführungsform wird erreicht, dass die einzelnen Lichtlinien in Längsrichtung gegeneinander verschoben sind, so dass die Maxima der Intensitätsverteilung der einzelnen Lichtlinien in Längsrichtung gegeneinander versetzt sind.

Es ist auch möglich, anstelle oder zusätzlich zu der Verschiebung der Zylinderlinsen in Richtung ihrer Zylinderachsen die Zylinderlinsen um eine Achse senkrecht zu ihren Zylinderachsen gegeneinander verkippt anzuordnen, so dass die optischen Achsen der Zylinderlinsen schräg zueinander verlaufen. Durch diese Verkippung wird auch eine optische Trennung der Lichtlinien auf der Empfangseinheit erzeugt, durch die das Auftreten von Interferenzen verhindert wird.

Wesentlich für die Erfindung ist es, daß die auf der Empfangseinheit auftreffenden Lichtlinien zumindest bereichsweise, insbesondere vollständig nicht überlagert sind, wobei diese örtliche Trennung durch unterschiedliche Ausgestaltungen, wie beispielsweise Verschiebung der Zylinderlinsen in Richtung und/oder senkrecht zu ihren Zylinderachsen, Verkippung der Zylinderlinsen, optische Keile usw. erreicht werden kann.

Grundsätzlich ist es auch möglich, daß eine erfindungsgemäße Sensoranordnung auch zur interferenzfreien Homogenisierung der Intensitätsverteilung nicht nur entlang einer Linie, sondern einer Fläche verwendet wird. Dazu kann die Empfangseinheit mehrere zeilenförmige Empfangselemente umfassen, die insbesondere parallel zueinander im wesentlichen abstandsfrei angeordnet sind, wodurch eine Empfangsmatrix gebildet wird.

Während eine vollständige, örtliche Trennung der einzelnen Lichtlinien bevorzugt ist, können die erfindungsgemäßen Vorteile auch bei einer nur teilweisen örtlichen Trennung der Einzellinien erzielt werden. Durch eine entsprechende Teilüberlagerung der Einzellinien erhält man einen homogenen Intensitätsoffset mit aufgesetzter interferenzbehafteter Überlagerung, so daß auch in diesem Fall eine Vergleichmäßigung der Lichtintensität entlang der Gesamtlichtlinie erreicht wird.

Die Anzahl, Geometrie und Anordnung der Zylinderlinsen ist auf die verwendeten Laserdioden, die geforderte Intensitätsverteilung, die Randsteilheit und die Einkopplungsverluste optimiert zu wählen. Dabei sind die Abbildungseigenschaften der eventuell vorhandenen Empfangsoptik mit zu berücksichtigen.

Die optischen Elemente, insbesondere die verwendeten Zylinderlinsen können konkav, konvex oder diffraktiv ausgebildet sein bzw. auch jede beliebige andere Form besitzen. Weiterhin ist es möglich, die Sensoranordnung als Transmission- oder als Reflexionsanordnung auszubilden. Die über die optischen Elemente erzeugten, voneinander getrennten Lichtlinien können sowohl über weitere optische Elemente, beispielsweise über einen Reflektor, oder ohne weitere optische Elemente direkt auf den Empfänger abgebildet werden.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher beschrieben; in diesen zeigen:
- Fig. 1: eine Draufsicht auf eine Anordnung von optischen Elementen, wie sie bei einer erfindungsgemäß ausgebildeten Sensoranordnung verwendet wird,
- Fig. 2: eine Seitenansicht der Anordnung gemäß Fig. 1 mit schematisch eingezeichnetem Strahlenverlauf,
- Fig. 3: die gemäß der Anordnung nach Fig. 1 und 2 auf der Empfangseinheit abgebildeten Lichtlinien,
- Fig. 4: die Intensitätsverteilung des Lichtes entlang der Lichtlinien nach Fig. 3,
- Fig. 5: die schematisch dargestellte resultierende Intensitätsverteilung bei optischer Überlagerung der in Fig. 3 dargestellten Lichtlinien,
- Fig. 6: einen schematischen Strahlenverlauf einer erfindungsgemäß ausgebildeten Sensoranordnung und
- Fig. 7-10: unterschiedliche Ausbildungen optischer Elemente, wie sie bei einer erfindungsgemäß ausgebildeten Sensoranordnung verwendet werden.

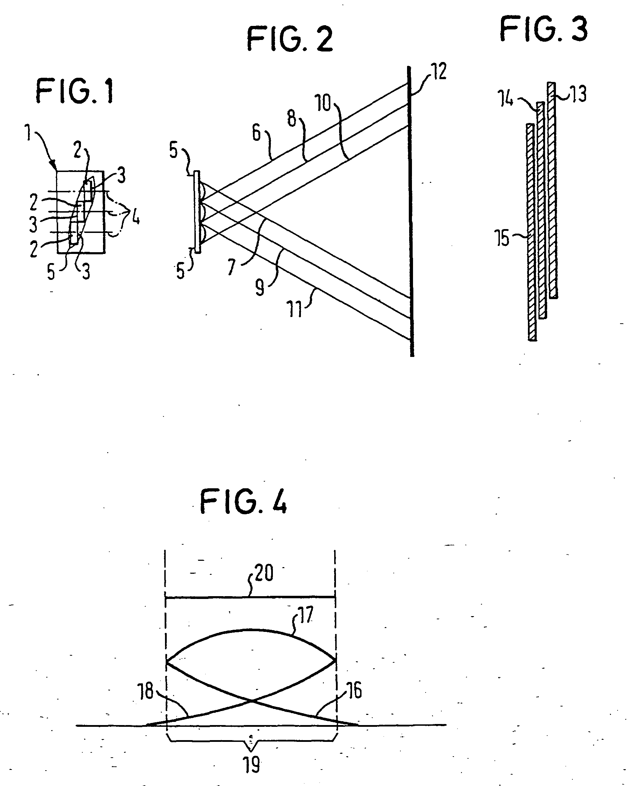

Fig. 1 zeigt eine Sendeeinheit 1, die drei als Zylinderlinsen 2 ausgebildete optische Elemente 3 umfaßt. Die Zylinderlinsen 2 sind sowohl in Richtung ihrer Zylinderachsen 4 als auch senkrecht dazu gegeneinander versetzt angeordnet und werden durch eine nicht dargestellte Lichtquelle, beispielsweise durch eine oder mehrere Laserdioden, mit Licht beaufschlagt, wie es durch eine Umrandungslinie 5 schematisch angedeutet ist.

Die Zylinderlinsen 2 sind dabei so gegeneinander verschoben, daß jeweils benachbart angeordnete Zylinderlinsen 2 sowohl in Richtung der Zylinderachsen 4 als auch senkrecht dazu abstandsfrei aneinander anliegen.

Die Zylinderlinsen 2 besitzen in Richtung ihrer Zylinderachsen 4 jeweils eine relativ geringe Breite, so daß beim Durchstrahlen der Zylinderlinsen 2 mit einem Lichtsignal eine längliche Lichtlinie erzeugt wird.

Dies ist deutlicher den Fig. 2 und 3 zu entnehmen, wobei in Fig. 2 die Aufweitung der durch die Zylinderlinsen 2 hindurchtretenden Lichtstrahlen erkennbar ist. Dabei ist in Fig. 2 der jeweils aufgeweitete Lichtstrahl durch seine Berandungsstrahlen (6, 7 für die obere Zylinderlinse, 8, 9 für die mittlere Zylinderlinse und 10, 11 für die untere Zylinderlinse) dargestellt.

Die durch die Berandungsstrahlen 6 bis 10 begrenzten Lichtsignale treffen auf eine angedeutete Empfangseinheit 12, die für das verwendete Licht empfindliche Empfangselemente umfaßt, durch die der empfangenen Lichtintensität entsprechende elektrische Signale erzeugt werden.

Die auf die Empfangseinheit 12 projizierten Lichtlinien sind in Fig. 3 dargestellt, wobei die Lichtlinie 13 den durch die Berandungsstrahlen 6, 7, die Lichtlinie 14 den durch die Berandungsstrahlen 8, 9 und die Lichtlinie 15 den durch die Berandungsstrahlen 10, 11 begrenzten Lichtsignalen entspricht. Die Breiten der Lichtlinien 13, 14, 15 sind dabei durch die Breiten der Zylinderlinsen 2 vorgegeben.

Man erkennt, daß aufgrund der in zwei Richtungen gegeneinander versetzten Zylinderlinsen 2 auch die auf die Empfangseinheit 12 abgebildeten Lichtlinien 1.3, 14, 15 sowohl in Längsrichtung als auch senkrecht dazu gegeneinander versetzt angeordnet sind. Somit sind die Lichtlinien 13, 14, 15 auf der Empfangseinheit 12 örtlich voneinander getrennt, so daß keine optische Überlagerung der Lichtlinien 13, 14, 15 auf der Empfangseinheit 12 erfolgt.

Fig. 4 zeigt die Lichtintensitätsverteilung entlang der Lichtlinien 13, 14, 15, wobei beispielsweise die Kurve 16 der Lichtlinie 13, die Kurve 17 der Lichtlinie 14 und die Kurve 18 der Lichtlinie 15 zugeordnet ist. Da durch die Empfangselemente der Empfangseinheit 12 die auftreffende Lichtintensität in elektrische Signale umgewandelt wird, die in ihrem Pegelverlauf den Kurven 16, 17, 18 entsprechen, addieren sich die elektrischen Signalpegel, die durch Auftreffen von Licht auf ein Empfangselement erzeugt werden, so daß über einen Bereich 19 ein im wesentlichen homogener Signalpegel 20 erzeugt wird. Somit wird über dem Bereich 19 entlang der Lichtlinien 13, 14, 15 eine im wesentlichen homogene Intensitätsverteilung des Lichtes erreicht, die insbesondere abstandsunabhängig ist. Dadurch kann der Rechenaufwand für die Auswertung der empfangenen Lichtsignale insbesondere bei hochauflösenden Sensorzeilen als Empfangselemente deutlich reduziert und somit die Auflösung des Sensors gesteigert werden.

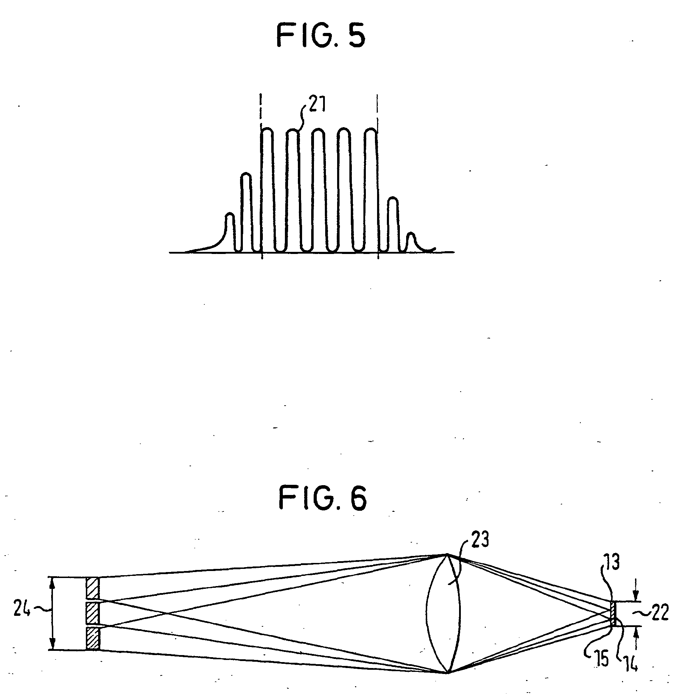

Würde man anstelle einer elektrischen Überlagerung eine optische Überlagerung der Lichtlinien 13, 14, 15 durch einfache Übereinanderanordnung der Zylinderlinsen 2, ohne seitliche Versetzung, erzeugen, so würden sich aufgrund der verwendeten polarisierten Lichtsignale Interferenzeffekte ergeben, die zu einem resultierenden Intensitätsverlauf 21 gemäß Fig. 5 führen würden. Eine Homogenität des Intensitätsverlaufes wäre auf diese Weise nicht erreichbar.

In Fig. 6, in der der Strahlenverlauf gemäß Fig. 2 aus einer Draufsicht von oben dargestellt ist, ist zu erkennen, daß die auf der Empfangseinheit 12 erzeugte Gesamtlinienbreite, bestehend aus den Einzellinienbreiten der Lichtlinien 13, 14, 15 sowie den Abständen zwischen den Lichtlinien, in ihrer Summe höchstens gleich der Breite 22 der verwendeten Empfangselemente sein darf. Dies kann durch entsprechende Wahl des Abbildungsmaßstabes, u.a. durch eine geeignete Empfangslinse 23 gewährleistet werden. Durch die Empfangslinse 23 wird die durch die Zylinderlinsen 2 ursprünglich erzeugte Gesamtlinienbreite 24 der Lichtstrahlen auf die Breite 22 abgebildet.

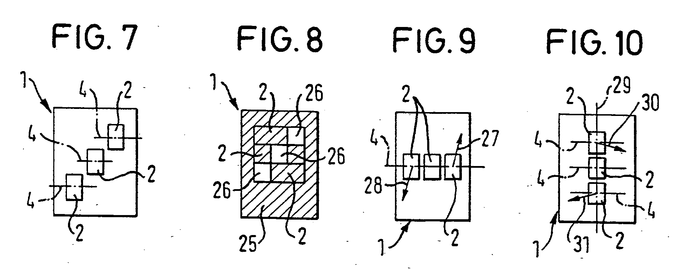

In den Fig. 7 bis 10 sind unterschiedliche Anordnungen der Zylinderlinsen 2 zur örtlichen Trennung der Lichtlinien 13, 14, 15 dargestellt. Dabei zeigt Fig. 7 die bereits in Fig. 1 dargestellte Anordnung, bei der die Zylinderlinsen 2 sowohl in Richtung als auch senkrecht zu ihren parallel angeordneten Zylinderachsen 4 gegeneinander verschoben sind.

In Fig. 8 besitzen alle drei Zylinderlinsen 2 die gleiche Breite, wobei die Zylinderlinsen 2 und der restliche Bereich der Sendeeinheit 1 durch eine schraffiert angedeutete Blende 25 abgedeckt sind.

Die Blende 25 besitzt Blendenöffnungen 26, _die so angeordnet sind, daß jeweils Teilbereiche der Zylinderlinsen 2 unverdeckt sind. Diese unverdeckten Teilbereiche sind dabei entsprechend den Zylinderlinsen 2 gemäß Fig. 7. angeordnet, so daß wiederum eine örtliche Trennung der auf die Empfangseinheit 12 auftreffenden Lichtlinien 13, 14, 15 entsprechend Fig. 3 entsteht.

Bei der in Fig. 9 dargestellten Ausführungsvariante sind alle drei Zylinderlinsen 2 nebeneinander angeordnet, so daß ihre Zylinderachsen 4 zusammenfallen. Die Verschiebung der Lichtlinien 13, 14, 15 in Längsrichtung wird in diesem Fall dadurch erreicht, daß die beiden äußeren Zylinderlinsen 2 um ihre Zylinderachsen 4 verkippt sind bzw. optische Keile eine Verkippung ergeben. Dabei ist die eine äußere Zylinderlinse 2 nach unten und die andere äußere Zylinderlinse 2 nach oben verkippt, so daß ihre optischen Achsen 27, 28 entsprechend der Darstellung in Fig. 9 nach oben bzw. nach unten zeigen.

Bei dem Ausführungsbeispiel gemäß Fig. 10 wird die Verschiebung der Lichtlinien 13, 14, 15 in Längsrichtung wie bei den Ausführungsbeispielen gemäß Fig. 7 und 8 durch ein Gegeneinanderverschieben der Zylinderlinsen 2 erzielt. Dazu sind die Zylinderlinsen 2 senkrecht übereinander entlang einer gemeinsamen Achse 29 angeordnet.

Die Parallelverschiebung der Lichtlinien 13, 14, 15 wird hingegen durch optische Keile oder ein Verkippen der oberen und unteren Zylinderlinsen 2 um die Achse 29 erreicht, so daß die optischen Achsen 30, 31 seitlich nach vorne aus der Zeichnungsebene herauszeigen.

Während in den Ausführungsbeispielen jeweils drei Zylinderlinsen dargestellt sind, ist die Erfindung nicht auf die Verwendung von drei Zylinderlinsen beschränkt. Es müssen zumindest zwei optische Elemente vorgesehen sein, wobei je nach gewünschter Breite des Abschnittes, in dem eine homogene Intensitätsverteilung erzielbar sein soll, auch mehrere optische Elemente verwendet werden können.

### Bezugszeichenliste

- 1): Sendeeinheit
- 2): Zylinderlinsen
- 3): optische Elemente
- 4): Zylinderachsen
- 5): Umrandungslinie
- 6): Berandungsstrahlen
- 7): Berandungsstrahlen
- 8): Berandungsstrahlen
- 9): Berandungsstrahlen
- 10): Berandungsstrahlen
- 11): Berandungsstrahlen
- 12): Empfangseinheit
- 13): Lichtlinie
- 14): Lichtlinie
- 15): Lichtlinie
- 16): Kurve
- 17): Kurve
- 18): Kurve
- 19): Bereich
- 20): homogener Signalpegel
- 21): Intensitätsverlauf
- 22): Breite
- 23): Empfangslinse
- 24): Gesamtlinienbreite
- 25): Blende
- 26): Blendenöffnungen
- 27): optische Achse
- 28): optische Achse
- 29): Drehachse
- 30): optische Achse
- 31): optische Achse

## Patentansprüche

1. Optoelektronische Sensoranordnung, insbesondere für die Durchhangs-, Kanten- und/oder Lichtschnittbestimmung, mit einer Sendeeinheit (1) zum Aussenden von zumindest zwei Lichtsignalen und mit einer Empfangseinheit (12) zum Empfangen der von der Sendeeinheit (1) ausgesandten Lichtsignale, wobei die Sendeeinheit (1) optische Elemente (2, 25) umfasst, durch die die ausgesandten Lichtsignale im wesentlichen linienförmig auf die Empfangseinheit (12) abgebildet werden,
**dadurch gekennzeichnet,**
**dass** die Lichtsignale polarisiert sind und dass die optischen Elemente (2, 25) so ausgebildet und angeordnet sind, dass die auf der Empfangseinheit (12) auftreffenden linienförmigen Lichtsignale (13, 14, 15) im wesentlichen parallel zueinander verlaufen und sowohl in Linienrichtung als auch senkrecht zur Linienrichtung gegeneinander versetzt sind und sich zumindest bereichsweise nicht überlagern.

2. Optoelektronische Sensoranordnung nach Anspruch 1,
**dadurch gekennzeichnet,**
**dass** die Sendeeinheit (1) insbesondere Laserdioden als Sendeelemente zum Aussenden der polarisierten Lichtsignale umfasst.

3. Optoelektronische Sensoranordnung nach Anspruch 1 oder 2,
**dadurch gekennzeichnet,**
**dass** die optischen Elemente als Zylinderlinsen (2) ausgebildet sind, wobei insbesondere die Zylinderlinsen (2) im Querschnitt im wesentlichen rechteckförmig ausgebildet sind.

4. Optoelektronische Sensoranordnung nach Anspruch 3,
**dadurch gekennzeichnet,**
**dass** die Zylinderachsen (4) der Zylinderlinsen (2) im wesentlichen parallel zueinander verlaufen.

5. Optoelektronische Sensoranordnung nach einem der vorhergehenden Ansprüche,
**dadurch gekennzeichnet,**
**dass** die optischen Elemente Blenden (25) mit im wesentlichen rechteckförmig ausgebildeten Blendenöffnungen (26) umfassen, wobei insbesondere die Blenden (25) durch lichtundurchlässige, insbesondere geschwärzte Umrandungen der Zylinderlinsen (2) gebildet werden.

6. Optoelektronische Sensoranordnung nach einem der Ansprüche 3 bis 5,
**dadurch gekennzeichnet,**
**dass** die Zylinderlinsen (2) und/oder die Blendenöffnungen (26) in einer Richtung senkrecht zu den Zylinderachsen (4) gegeneinander versetzt angeordnet sind, und/oder
**dass** die Zylinderlinsen (2) und/oder die Blendenöffnungen (26) in Richtung der Zylinderachsen (4) gegeneinander versetzt angeordnet sind.

7. Optoelektronische Sensoranordnung nach einem der vorhergehenden Ansprüche,
**dadurch gekennzeichnet,**
**dass** die optischen Elemente mindestens zwei, insbesondere drei Zylinderlinsen (2) und/oder mindestens zwei, insbesondere drei Blendenöffnungen (6) umfassen.

8. Optoelektronische Sensoranordnung nach einem der Ansprüche 3 bis 7,
**dadurch gekennzeichnet,**
**dass** die Zylinderlinsen (2) um ihre Zylinderachsen (4) gegeneinander verkippt angeordnet sind bzw. über optische Keile sich eine Verkippung ergibt, so dass die optischen Achsen (27, 28) der Zylinderlinsen (2) schräg zueinander verlaufen, und/oder
**dass** die Zylinderlinsen (2) um eine Achse (29) senkrecht zu ihren Zylinderachsen (4) gegeneinander verkippt angeordnet sind bzw. über optische Keile sich eine Verkippung ergibt, so dass die optischen Achsen (30, 31) der Zylinderlinsen (2) schräg zueinander verlaufen.

9. Optoelektronische Sensoranordnung nach einem der vorhergehenden Ansprüche,
**dadurch gekennzeichnet,**
**dass** die Empfangseinheit (12) zumindest ein zeilenförmiges Empfangselement umfasst, wobei insbesondere die Empfangseinheit (12) mehrere zeilenförmige Empfangselemente umfasst, die insbesondere parallel zueinander im wesentlichen abstandsfrei angeordnet sind.

## Claims

1. An optoelectronic sensor arrangement, in particular for the determination of sagging, edges and/or a light section, having a transmitter unit (1) for the transmission of at least two light signals and having a receiver unit (12) for the reception of the light signals transmitted by the transmitter unit (1), wherein the transmitter unit (1) comprises optical elements (2, 25) by which the transmitted light signals are imaged onto the receiver unit (12) in substantially linear form,
**characterised in that**
the light signals are polarised; and **in that** the optical elements (2, 25) are imaged and arranged such that the linear light signals (13, 14, 15) incident on the receiver unit (12) extend substantially parallel to one another and are offset to one another both in a linear direction and perpendicular to the linear direction and do not overlap at least regionally.

2. An optoelectronic sensor arrangement in accordance with claim 1, **characterised in that** the transmitter unit (1) in particular comprises laser diodes as transmitter elements for the transmission of the polarised light signals.

3. An optoelectronic sensor arrangement in accordance with claim 1 or claim 2, **characterised in that** the optical elements are made as cylinder lenses (2), with the cylinder lenses (2) in particular being substantially rectangular in cross-section.

4. An optoelectronic sensor arrangement in accordance with claim 3, **characterised in that** the cylinder axes (4) of the cylinder lenses (2) extend substantially parallel to one another.

5. An optoelectronic sensor arrangement in accordance with any one of the preceding claims, **characterised in that** the optical elements comprise diaphragms (25) with diaphragm apertures (26) which are substantially rectangular, with the diaphragms (25) in particular being formed by borders, in particular blackened borders, of the cylinder lenses (2) which are impermeable to light.

6. An optoelectronic sensor arrangement in accordance with any one of the claims 3 to 5, **characterised in that** the cylinder lenses (2) and/or the diaphragm apertures (26) are arranged offset to one another in a direction perpendicular to the cylinder axes (4); and/or in that the cylinder lenses (2) and/or the diaphragm apertures (26) are arranged offset to one another in the direction of the cylinder axes (4).

7. An optoelectronic sensor arrangement in accordance with any one of the preceding claims, **characterised in that** the optical elements comprise at least two cylinder lenses (2), in particular three cylinder lenses (2) and/or at least two diaphragm apertures (6), in particular three diaphragm apertures (6).

8. An optoelectronic sensor arrangement in accordance with any one of the claims 3 to 7, **characterised in that** the cylinder lenses (2) are arranged tilted with respect to one another around their cylinder axes (4) or that a tilt results via optical wedges such that the optical axes (27, 28) of the cylinder lenses (2) extend obliquely to one another (27, 28); and/or **in that** the cylinder lenses (2) are arranged tilted with respect to one another around an axis (29) perpendicular to their cylinder axes (4) or that a tilt results via optical wedges such that the optical axes (30, 31) of the cylinder lenses (2) extend obliquely to one another.

9. An optoelectronic sensor arrangement in accordance with any one of the preceding claims, **characterised in that** the receiver unit (12) comprises at least one linear receiver element, wherein the receiver unit (12) in particular comprises a plurality of linear receiver elements which are in particular arranged parallel to one another substantially free of spacing.

## Revendications

1. Dispositif détecteur optoélectronique, en particulier pour la détermination de fléchissements, d'arêtes et/ou d'interruptions de lumière, comprenant une unité émettrice (1) pour émettre au moins deux signaux lumineux, et comprenant une unité réceptrice (12) pour recevoir les signaux lumineux émis par l'unité émettrice (1), ladite unité émettrice (1) comprenant des éléments optiques (2, 25) au moyen desquels une image des signaux lumineux émis est formée sensiblement en forme de ligne sur l'unité réceptrice (12),
**caractérisé en ce que** les signaux lumineux sont polarisés, et **en ce que** les éléments optiques (2, 25) sont réalisés et agencés de telle façon que les signaux lumineux (13, 14, 15) en forme de ligne qui tombent sur l'unité réceptrice (12) sont sensiblement parallèles les uns aux autres et décalés les uns par rapport aux autres aussi bien dans la direction de la ligne que perpendiculairement à la direction de la ligne, et ne se chevauchent pas au moins localement.

2. Dispositif détecteur optoélectronique selon la revendication 1, **caractérisé en ce que** l'unité émettrice (1) comprend en particulier des diodes laser à titre d'éléments émetteurs pour émettre les signaux lumineux polarisés.

3. Dispositif détecteur optoélectronique selon la revendication 1 ou 2, **caractérisé en ce que** les éléments optiques sont réalisés sous forme de lentilles cylindriques (2), lesdites lentilles cylindriques (2) étant en particulier réalisées sensiblement sous forme rectangulaire en section transversale.

4. Dispositif détecteur optoélectronique selon la revendication 3, **caractérisé en ce que** les axes (4) des lentilles cylindriques (2) sont sensiblement parallèles les uns aux autres.

5. Dispositif détecteur optoélectronique selon l'une des revendications précédentes, **caractérisé en ce que** les éléments optiques comprennent des diaphragmes (25) avec des ouvertures de diaphragme (26) réalisées sensiblement sous forme rectangulaire, lesdits diaphragmes (25) étant en particulier réalisés par des bordures opaques, en particulier noircies, des lentilles cylindriques (2).

6. Dispositif détecteur optoélectronique selon l'une des revendications 3 à 5,
**caractérisé en ce que** les lentilles cylindriques (2) et/ou les ouvertures de diaphragme (26) sont agencées en décalage les unes par rapport aux autres dans une direction perpendiculaire aux axes (4) des cylindres, et/ou
**en ce que** les lentilles cylindriques (2) et/ou les ouvertures de diaphragme (26) sont agencées en décalage les unes par rapport aux autres dans la direction des axes (4) des cylindres.

7. Dispositif détecteur optoélectronique selon l'une des revendications précédentes,
**caractérisé en ce que** les éléments optiques comprennent au moins deux, en particulier trois lentilles cylindriques (2) et/ou au moins deux, en particulier trois ouvertures de diaphragme (6).

8. Dispositif détecteur optoélectronique selon l'une des revendications 3 à 7,
**caractérisé en ce que** les lentilles cylindriques (2) sont agencées de façon basculée les unes par rapport aux autres autour de leurs axes (4), ou **en ce qu'**on produit un basculement au moyen de coins optiques, de telle façon que les axes optiques (27, 28) des lentilles cylindriques (2) s'étendent en oblique les uns par rapport aux autres, et/ou **en ce que** les lentilles cylindriques (2) sont agencées de façon basculée les unes par rapport aux autres perpendiculairement à leurs axes (4), ou **en ce qu'**on produit un basculement au moyen de coins optiques, de telle façon que les axes optiques (30, 31) des lentilles cylindriques (2) s'étendent en oblique les uns par rapport aux autres.

9. Dispositif détecteur optoélectronique selon l'une des revendications précédentes,
**caractérisé en ce que** l'unité réceptrice (12) comprend au moins un élément récepteur en forme de ligne, ladite unité réceptrice (12) comprenant en particulier plusieurs éléments récepteurs en forme de ligne qui sont agencés en particulier parallèlement les uns aux autres et sensiblement sans écartement.
